# EUROPEAN PATENT APPLICATION

(11) **EP 4 548 782 A1**
(43) Date of publication of application: **07.05.2025**
(21) Application number: 22949295.4
(22) Date of filing: 28.06.2022
(51) Int. Cl.: A24B 3/14

(54) **MANUFACTURING DEVICE AND MANUFACTURING METHOD FOR RECONSTITUTED TOBACCO SHEET**

(71) Applicant: Japan Tobacco Inc., Tokyo 105-6927 (JP)
(72) Inventor: SENDA, Kotaro, Tokyo 130-8603 (JP)
(74) Representative: Hoffmann Eitle
(86) International application number: PCT/JP2022/025693
(87) International publication number: WO 2024/004018

(57) **Abstract**

This manufacturing device for reconstituted tobacco raw material has a die for discharging the reconstituted tobacco raw material as a sheet, and a temperature adjustment device for adjusting the temperature of the reconstituted tobacco raw material that passes through the die.

## Description

### TECHNICAL FIELD

The present invention relates to a manufacturing apparatus and a manufacturing method for a reconstituted tobacco sheet.

### BACKGROUND ART

Conventionally, rolling, casting (slurry process), and sheet making are known as a manufacturing method for a reconstituted tobacco sheet. These manufacturing methods are selected according to the amount of moisture contained in reconstituted tobacco raw material. These manufacturing methods are implemented by manufacturing apparatuses for a reconstituted tobacco sheet, different from one another.

It is known that rolling is particularly suitable for a reconstituted tobacco raw material containing a moisture content of 50vol% or lower. In rolling, a kneaded product of reconstituted tobacco raw material is rolled with rotary rollers to adjust the thickness and then dried with a separately provided dryer.

It is known that casting (slurry process) is particularly suitable for a reconstituted tobacco raw material containing a moisture content of 50vol% or higher. In casting (slurry process), a fluid of reconstituted tobacco raw material is continuously spread onto a rotary drum or a belt conveyor and evened out to a desired thickness with a member called a blade, then peeled off from the rotary drum or the belt conveyor and dried with a separately provided dryer.

It is known that sheet making is particularly suitable for a reconstituted tobacco raw material containing a moisture content of 80vol% or higher. In sheet making, a fluid of reconstituted tobacco raw material is continuously spread onto a liquid-permeable belt conveyor, subjected to removal of moisture and evened out to a desired thickness with squeeze rollers, and then dried with a separately provided dryer.

For these manufacturing methods to be selected according to the amount of moisture, a manufacturing apparatus and a manufacturing method for a reconstituted tobacco sheet, which allow to obtain a reconstituted tobacco sheet with a uniform thickness with a simple manufacturing process regardless of the amount of moisture contained in reconstituted tobacco raw material, are known (see PTL 1).

### CITATION LIST

### PATENT LITERATURE

PTL 1: International Publication No. 2022/019027

### SUMMARY OF INVENTION

### TECHNICAL PROBLEM

At the time of discharging reconstituted tobacco raw material from a die, if the flow rate is not uniform in a discharge direction or a width direction orthogonal to the discharge direction, wrinkles may be formed in a reconstituted tobacco sheet discharged.

One object of the present invention is to provide a manufacturing apparatus and a manufacturing method for a reconstituted tobacco sheet, which manufacture a reconstituted tobacco sheet with a small number of wrinkles.

### SOLUTION TO PROBLEM

A first aspect provides a manufacturing apparatus for a reconstituted tobacco sheet. This manufacturing apparatus for a reconstituted tobacco sheet includes a die that discharges reconstituted tobacco raw material in a sheet shape, and a temperature adjustment device that adjusts a temperature of the reconstituted tobacco raw material passing through the die.

It is found that one of causes of formation of wrinkles of sheet-shaped reconstituted tobacco raw material discharged from the die is a flowability of the raw material. Specifically, when the flowability of the raw material is low, the flow rate may not uniform in a discharge direction or in a width direction For this reason, according to the first aspect, it is possible to decrease the viscosity of the reconstituted tobacco raw material, that is, increase the flowability of the reconstituted tobacco raw material, by heating the reconstituted tobacco raw material passing through the die with the temperature adjustment device. Alternatively, it is possible to uniform a discharge flow rate in a width direction by partially heating a part with a small discharge amount with the temperature adjustment device to partially increase the discharge flow rate. As a result, it is possible to suppress formation of wrinkles in the reconstituted tobacco sheet. Wrinkles may be formed when there occurs a part where the discharge flow rate is high in the width direction of the reconstituted tobacco sheet. For this reason, according to the first aspect, it is possible to partially reduce the discharge flow rate and uniformizing the discharge flow rate in the width direction by partially cooling the part where the discharge flow rate is high with the temperature adjustment device. As a result, it is possible to suppress formation of wrinkles in the reconstituted tobacco sheet. In the specification, "wrinkles" of the reconstituted tobacco sheet are not limited to folds formed in the sheet and also include a nonuniform thickness part, slack, or wavy part of the sheet, a wave pattern appearance, or the like.

An outline of a second aspect is that, in the first aspect, the temperature adjustment device is mounted to the die.

According to the second aspect, the temperature adjustment device is capable of directly adjusting via the die the temperature of the reconstituted tobacco raw material passing through the die, so it is possible to further efficiently adjust the temperature of the reconstituted tobacco raw material.

An outline of a third aspect is that, in the first aspect or the second aspect, the temperature adjustment device includes a heating device that heats the reconstituted tobacco raw material passing through the die.

According to the third aspect, it is possible to decrease the viscosity of the reconstituted tobacco raw material, that is, increase the flowability of the reconstituted tobacco raw material, by heating the reconstituted tobacco raw material passing through the die with the heating device. Alternatively, it is possible to uniform a discharge flow rate in a width direction by partially heating a part with a small discharge amount with the temperature adjustment device to partially increase the discharge flow rate. As a result, it is possible to suppress formation of wrinkles in the reconstituted tobacco sheet.

An outline of a fourth aspect is that, in the third aspect, the heating device is configured to heat the reconstituted tobacco raw material such that the temperature of the reconstituted tobacco raw material passing through the die becomes lower than 100°C.

According to the fourth aspect, it is possible to suppress formation of wrinkles in the reconstituted tobacco sheet by increasing the flowability of the reconstituted tobacco raw material while reducing condensation of moisture contained in the reconstituted tobacco raw material at a discharge port of the die as a result of vaporization of the moisture.

An outline of a fifth aspect is that, in the first aspect or the second aspect, the temperature adjustment device includes a cooling device that cools the reconstituted tobacco raw material passing through the die.

According to the fifth aspect, it is possible to uniform the discharge flow rate in the width direction by partially cooling the part where the discharge flow rate is high with the cooling device. As a result, it is possible to suppress formation of wrinkles in the reconstituted tobacco sheet.

An outline of a sixth aspect is that, in any one of the first aspect to the fifth aspect, the die has a slot-shaped discharge port through which the reconstituted tobacco raw material is discharged in a sheet shape, and the manufacturing apparatus for a reconstituted tobacco sheet includes a plurality of the temperature adjustment devices mounted to the die along a longitudinal direction of the discharge port and controllable independently of each other.

According to the sixth aspect, it is possible to partially adjust the temperature of the reconstituted tobacco raw material passing through the die in the longitudinal direction of the discharge port of the die, that is, in the width direction orthogonal to the discharge direction. Therefore, when the flow rate is not uniform in the width direction, it is possible to suppress formation of wrinkles in the discharged sheet-shaped reconstituted tobacco raw material by partially adjusting the temperature (that is, viscosity) of reconstituted tobacco.

An outline of a seventh aspect is that, in any one of the first aspect to the sixth aspect, a control device configured to control an operation of the temperature adjustment device is provided.

According to the seventh aspect, the operation of the temperature adjustment device can be controlled by the control device, so it is possible to control the operation of the temperature adjustment device such that formation of wrinkles is suppressed according to formation of wrinkles.

An outline of an eighth aspect is that, in the seventh aspect, a first sensor that is communicably connected to the control device and that measures the temperature of the reconstituted tobacco raw material passing through the die is provided and the control device is configured to control an operation of the temperature adjustment device based on measured data of the first sensor.

According to the eighth aspect, for example, when the temperature measured by the first sensor is lower than a predetermined value, it is estimated that the viscosity of the reconstituted tobacco raw material passing through the die is high, so the control device can suppress formation of wrinkles by controlling the temperature adjustment device such that the temperature of the reconstituted tobacco raw material increases. For example, when the temperature measured by the first sensor is higher than a predetermined value, for example, higher than or equal to 100°C, the control device is capable of suppressing occurrence of a state change, such as vaporization, of the reconstituted tobacco raw material or a chemical change of the reconstituted tobacco raw material by controlling the temperature adjustment device such that the temperature of the reconstituted tobacco raw material decreases.

An outline of a ninth aspect is that, in the seventh aspect or the eighth aspect, an extruder that extrudes the reconstituted tobacco raw material to the die is provided, the extruder includes an extrusion screw, a chamber through which the reconstituted tobacco raw material extruded by the extrusion screw passes, and a second sensor that is communicably connected to the control device and that measures a temperature or a pressure in the chamber, and the control device controls an operation of the temperature adjustment device based on measured data of the second sensor.

According to the ninth aspect, the temperature or the pressure in the chamber of the extruder can be measured with the second sensor. When the temperature in the chamber is lower than a predetermined value or when the pressure in the chamber is higher than a predetermined value, it is estimated that the viscosity of the reconstituted tobacco raw material is high. In this case, there is a possibility that backflow of the reconstituted tobacco raw material from the die to the extruder can occur. Furthermore, in this case, dispersion of raw material inside the die is not facilitated, and there is a possibility that uniform discharge of the reconstituted tobacco raw material from the die becomes difficult. For this reason, according to the ninth aspect, for example, when the temperature in the chamber is lower than a predetermined value or when the pressure in the chamber is higher than a predetermined value, the control device is capable of controlling the operation of the temperature adjustment device such that the reconstituted tobacco raw material is heated to decrease the viscosity. For example, when the temperature in the chamber is higher than a predetermined value, for example, higher than or equal to 100°C, the control device is capable of suppressing occurrence of a state change, such as vaporization, of the reconstituted tobacco raw material or a chemical change of the reconstituted tobacco raw material by controlling the temperature adjustment device such that the temperature of the reconstituted tobacco raw material decreases.

An outline of a tenth aspect is that, in any one of the seventh aspect to the ninth aspect dependent on the sixth aspect, a third sensor that is communicably connected to the control device and that measures an appearance, a flow rate, or a sheet thickness of the sheet-shaped reconstituted tobacco raw material discharged from the die is provided, and the control device controls an operation of at least one of a plurality of the temperature adjustment devices based on measured data of the third sensor.

According to the tenth aspect, the third sensor measures the appearance, the flow rate, or the sheet thickness, with the result that it is possible to detect whether wrinkles are formed in the sheet-shaped reconstituted tobacco raw material. Specifically, the control device can detect formation of wrinkles based on measured data on the appearance with the third sensor. The control device receives measured data on the flow rate or sheet thickness with the third sensor and can determine that wrinkles are formed when a fluctuation range of the sheet thickness or flow rate in a predetermined time falls outside a predetermined range. In this way, when the control device detects formation of wrinkles, it is possible to suppress formation of wrinkles by, for example, heating or cooling the reconstituted tobacco raw material passing through the die. The manufacturing apparatus for a reconstituted tobacco sheet preferably includes third sensors in the same number as the number of a plurality of the temperature adjustment devices. In this case, the plurality of third sensors is disposed along the width direction to measure the thickness or flow rate of the sheet-shaped reconstituted tobacco raw material at multiple points in the width direction, with the result that the control device can detect a part where the sheet is thick (a part where the flow rate is high) or a part where the sheet is thin (a part where the flow rate is low) in the width direction. The control device is capable of suppressing formation of wrinkles by controlling the temperature adjustment device corresponding to the third sensor having measured the thick part or thin part of the sheet in the width direction according to this detection result.

An outline of an eleventh aspect is that, in the seventh aspect, an extruder that extrudes the reconstituted tobacco raw material to the die and a third sensor that is communicably connected to the control device and that measures an appearance, a flow rate, or a sheet thickness of the sheet-shaped reconstituted tobacco raw material discharged from the die are provided, the control device is configured to control an operation of the extruder, and the control device controls an extrusion rate of the extruder based on measured data of the third sensor.

It is found that wrinkles are formed in the sheet-shaped reconstituted tobacco raw material when material is not uniformly dispersed inside the die and the flow rate is not uniform in the discharge direction or in the width direction. For this reason, when wrinkles are formed in the sheet-shaped reconstituted tobacco raw material, the pressure inside the die is increased and raw material is uniformly dispersed by increasing the extrusion rate of the extruder. As a result, formation of wrinkles in the sheet-shaped reconstituted tobacco raw material is suppressed. According to the eleventh aspect, the third sensor measures the appearance, the flow rate, or the sheet thickness, with the result that it is possible to detect whether wrinkles are formed in the sheet-shaped reconstituted tobacco raw material. Specifically, the control device can detect formation of wrinkles based on measured data on the appearance with the third sensor. The control device receives measured data on the flow rate or sheet thickness with the third sensor and can determine that wrinkles are formed when, for example, a fluctuation range of the sheet thickness or flow rate in a predetermined time falls outside a predetermined range. In this way, when the control device detects formation of wrinkles, it is possible to suppress formation of wrinkles by increasing the extrusion rate of the extruder.

An outline of a twelfth aspect is that, in any one of the first aspect to the eleventh aspect, a take-up device that takes up the sheet-shaped reconstituted tobacco raw material discharged from the die while applying tension to the sheet-shaped reconstituted tobacco raw material is provided.

According to the twelfth aspect, tension can be applied to the sheet-shaped reconstituted tobacco raw material discharged from the die with the take-up device, so, when wrinkles are formed in the sheet-shaped reconstituted tobacco raw material, it is possible to stretch the wrinkles and reduce the extent of the wrinkles.

A thirteenth aspect provides a manufacturing method for a reconstituted tobacco sheet. The manufacturing method for a reconstituted tobacco sheet includes adjusting a temperature of the reconstituted tobacco raw material passing through a die, and discharging the reconstituted tobacco raw material from the die in a sheet shape.

It is found that one of causes of formation of wrinkles of a reconstituted tobacco sheet discharged from the die is a flowability of raw material. Specifically, when the flowability of raw material is low, the flow rate can be not uniform in a discharge direction or in a width direction. For this reason, according to the thirteenth aspect, it is possible to decrease the viscosity of the reconstituted tobacco raw material, that is, increase the flowability of the reconstituted tobacco raw material, by heating the reconstituted tobacco raw material passing through the die with the temperature adjustment device. Alternatively, it is possible to uniform a discharge flow rate in a width direction by partially heating a part with a small discharge amount with the temperature adjustment device to partially increase the discharge flow rate. As a result, it is possible to suppress formation of wrinkles in the reconstituted tobacco sheet. Wrinkles may be formed when there occurs a part where the discharge flow rate is high in the width direction of the reconstituted tobacco sheet. For this reason, according to the thirteenth aspect, it is possible to uniform the discharge flow rate in the width direction by partially cooling the part where the discharge flow rate is high. As a result, it is possible to suppress formation of wrinkles in the reconstituted tobacco sheet.

A fourteenth aspect provides a manufacturing apparatus for a reconstituted tobacco sheet. The manufacturing apparatus for a reconstituted tobacco sheet includes a die that discharges reconstituted tobacco raw material in a sheet shape, an extruder that extrudes the reconstituted tobacco raw material to the die, a control device configured to control an operation of the extruder, and a first sensor that is communicably connected to the control device and that measures an appearance, a flow rate, or a sheet thickness of the sheet-shaped reconstituted tobacco raw material discharged from the die, and the control device controls an extrusion rate of the extruder based on measured data of the first sensor.

It is found that wrinkles are formed in the sheet-shaped reconstituted tobacco raw material when material is not uniformly dispersed inside the die and the flow rate is not uniform in the discharge direction or in the width direction. For this reason, when wrinkles are formed in the sheet-shaped reconstituted tobacco raw material, the pressure inside the die is increased and raw material is uniformly dispersed by increasing the extrusion rate of the extruder. As a result, formation of wrinkles in the sheet-shaped reconstituted tobacco raw material is suppressed. According to the fourteenth aspect, the first sensor measures the appearance, the flow rate, or the sheet thickness, with the result that it is possible to detect whether wrinkles are formed in the sheet-shaped reconstituted tobacco raw material. Specifically, the control device can detect formation of wrinkles based on measured data on the appearance with the first sensor. The control device receives measured data on the flow rate or sheet thickness with the first sensor and can determine that wrinkles are formed when, for example, a fluctuation range of the sheet thickness or flow rate in a predetermined time falls outside a predetermined range. In this way, when the control device detects formation of wrinkles, it is possible to suppress formation of wrinkles by increasing the extrusion rate of the extruder.

An outline of a fifteenth aspect is that, in the fourteenth aspect, the control device increases the extrusion rate of the extruder when the control device determines that a fluctuation range of the sheet thickness or flow rate measured by the first sensor in a predetermined time falls outside a predetermined range.

According to the fifteenth aspect, the control device understands that the flow rate is not uniform in the discharge direction of the sheet when a fluctuation range of the thickness or flow rate measured by the first sensor falls outside a predetermined range, and determines that wrinkles are formed. In this way, the control device is capable of suppressing formation of wrinkles by increasing the extrusion rate of the extruder when a fluctuation range of the thickness or flow rate measured by the first sensor falls outside a predetermined range.

An outline of a sixteenth aspect is that, in the fourteenth aspect, the first sensor is configured to measure a thickness or a flow rate of the sheet-shaped reconstituted tobacco raw material discharged from the die at multiple points in a width direction, and the control device increases the extrusion rate of the extruder based on the thickness or the flow rate measured by the first sensor at the multiple points.

According to the sixteenth aspect, the first sensor measures the thickness or flow rate of the sheet-shaped reconstituted tobacco raw material at multiple points in the width direction, with the result that the control device can detect a part where the sheet is thick (a part where the flow rate is high) or a part where the sheet is thin (a part where the flow rate is low) in the width direction. The control device understands that wrinkles are formed, for example, "when a part thicker than or thinner than a predetermined thickness is detected", "when a difference in thickness between selected two points of multiple points falls outside a predetermined numeric range", "when a difference between an average value and a maximum value or a minimum value of thicknesses at multiple points falls outside a predetermined numeric range", "when a distribution of thicknesses at multiple points falls outside a predetermined range", or the like, and is capable of suppressing formation of wrinkles by increasing the extrusion rate of the extruder.

An outline of a seventeenth aspect is that, in the fourteenth aspect, the control device determines whether wrinkles are formed in the sheet-shaped reconstituted tobacco raw material based on the appearance measured by the first sensor and increases the extrusion rate of the extruder when the control device determines that the wrinkles are formed.

According to the seventeenth aspect, the control device determines whether wrinkles are formed in the sheet-shaped reconstituted tobacco raw material by applying, for example, a known image analysis or the like to the appearance measured by the first sensor. Thus, the control device is capable of suppressing formation of wrinkles by increasing the extrusion rate of the extruder.

An outline of an eighteenth aspect is that, in any one of the fourteenth aspect to the seventeenth aspect, a second sensor that is communicably connected to the control device and that is configured to measure a pressure inside the die or the extruder is provided, and the control device decreases the extrusion rate of the extruder when the control device determines that the pressure measured by the second sensor is higher than or equal to a predetermined value.

When the pressure inside the die or the extruder is too high, there are concerns about occurrence of backflow from the die to the extruder. According to the eighteenth aspect, in, for example, a case where the control device increases the extrusion rate of the extruder to suppress formation of wrinkles, when the control device determines that the pressure measured by the second sensor is higher than or equal to a predetermined value, the control device is capable of stabilizing a discharge status by decreasing the extrusion rate of the extruder.

An outline of a nineteenth aspect is that, in any one of the fourteenth aspect to the eighteenth aspect, a third sensor that is communicably connected to the control device and that is configured to measure a temperature of the reconstituted tobacco raw material passing through the die or the extruder is provided, and the control device increases the extrusion rate of the extruder when the control device determines that the temperature measured by the third sensor is lower than or equal to a predetermined value.

In general, when the extrusion rate of the extruder is increased, the temperature of the reconstituted tobacco raw material also increases. When the temperature of the reconstituted tobacco raw material passing through the die or the extruder is lower than or equal to a predetermined value, it is presumable that the viscosity of the reconstituted tobacco raw material inside the die or the extruder is high or the extrusion rate is low, with the result that there is a possibility that wrinkles can be formed in the sheet-shaped reconstituted tobacco raw material discharged from the die. According to the nineteenth aspect, when the control device determines that the temperature measured by the third sensor is lower than or equal to a predetermined value, it is possible to suppress formation of wrinkles by increasing the extrusion rate of the extruder.

A twentieth aspect provides a manufacturing method for a reconstituted tobacco sheet. The manufacturing method for a reconstituted tobacco sheet includes supplying a reconstituted tobacco raw material to an extruder, extruding the reconstituted tobacco raw material to a die with the extruder, discharging the reconstituted tobacco raw material from the die in a sheet shape, measuring an appearance, flow rate, or sheet thickness of the sheet-shaped reconstituted tobacco raw material discharged from the die, and controlling an extrusion rate of the extruder based on a measurement result of the appearance, flow rate, or sheet thickness of the reconstituted tobacco raw material.

It is found that wrinkles are formed in the sheet-shaped reconstituted tobacco raw material when material is not uniformly dispersed inside the die and the flow rate is not uniform in the discharge direction or in the width direction. For this reason, when wrinkles are formed in the sheet-shaped reconstituted tobacco raw material, the pressure inside the die is increased and raw material is uniformly dispersed by increasing the extrusion rate of the extruder. As a result, formation of wrinkles in the sheet-shaped reconstituted tobacco raw material is suppressed. According to the twentieth aspect, it is possible to detect whether there are wrinkles in sheet-shaped reconstituted tobacco raw material by measuring the appearance, flow rate, or sheet thickness of the sheet-shaped reconstituted tobacco raw material discharged from the die. Specifically, formation of wrinkles can be detected based on a measurement result of the appearance. When, for example, a fluctuation range of the sheet thickness or flow rate in a predetermined time falls outside a predetermined range based on a measurement result of the flow rate or sheet thickness, it can be determined that wrinkles are formed. In this way, when formation of wrinkles has been detected, it is possible to suppress formation of wrinkles by increasing the extrusion rate of the extruder.

An outline of a twenty-first aspect is that, in the twentieth aspect, when a fluctuation range of the sheet thickness or flow rate in a predetermined time falls outside a predetermined range, the extrusion rate of the extruder is increased.

According to the twenty-first aspect, it is understood that the flow rate is not uniform in the discharge direction of the sheet when a fluctuation range of the thickness or flow rate measured falls outside a predetermined range, and it is determined that wrinkles are formed. In this way, it is possible to suppress formation of wrinkles by increasing the extrusion rate of the extruder when a fluctuation range of the thickness or flow rate measured falls outside a predetermined range.

An outline of a twenty-second aspect is that, in the twentieth aspect, a thickness or a flow rate of the sheet-shaped reconstituted tobacco raw material discharged from the die at multiple points in a width direction is measured, and the extrusion rate of the extruder is increased based on the thickness or flow rate measured at the multiple points.

According to the twenty-second aspect, by measuring the thickness or flow rate of the sheet-shaped reconstituted tobacco raw material at multiple points in the width direction, a part where the sheet is thick (a part where the flow rate is high) or a part where the sheet is thin (a part where the flow rate is low) in the width direction can be detected. Thus, it is estimated that wrinkles are formed, for example, "when a part thicker than or thinner than a predetermined thickness is detected", "when a difference in thickness between selected two points of multiple points falls outside a predetermined numeric range", "when a difference between an average value and a maximum value or a minimum value of thicknesses at multiple points falls outside a predetermined numeric range", "when a distribution of thicknesses at multiple points falls outside a predetermined range", or the like, and it is possible to suppress formation of wrinkles by increasing the extrusion rate of the extruder.

An outline of a twenty-third aspect is that, in the twentieth aspect, it is determined whether wrinkles are formed in the sheet-shaped reconstituted tobacco raw material based on the appearance, and the extrusion rate of the extruder is increased when the wrinkles are formed.

According to the twenty-third aspect, it is determined whether wrinkles are formed in the sheet-shaped reconstituted tobacco raw material based on the appearance, and it is possible to suppress formation of the wrinkles by increasing the extrusion rate of the extruder.

An outline of a twenty-fourth aspect is that, in any one of the twentieth aspect to the twenty-third aspect, a pressure inside the die or the extruder is measured and the extrusion rate of the extruder is decreased when the measured pressure is higher than or equal to a predetermined value.

When the pressure inside the die or the extruder is too high, there are concerns about occurrence of backflow from the die to the extruder. According to the twenty-fourth aspect, in, for example, a case where the extrusion rate of the extruder is increased to suppress formation of wrinkles, when it is determined that the measured pressure is higher than or equal to a predetermined value, it is possible to stabilize a discharge status by decreasing the extrusion rate of the extruder.

An outline of a twenty-fifth aspect is that, in any one of the twentieth aspect to the twenty-fourth aspect, a temperature of the reconstituted tobacco raw material passing through the die or the extruder is measured and the extrusion rate of the extruder is increased when the measured temperature is lower than or equal to a predetermined value.

In general, when the extrusion rate of the extruder is increased, the temperature of the reconstituted tobacco raw material also increases. When the temperature of the reconstituted tobacco raw material passing through the die or the extruder is lower than or equal to a predetermined value, it is presumable that the viscosity of the reconstituted tobacco raw material inside the die or the extruder is high or the extrusion rate is low, with the result that there is a possibility that wrinkles can be formed in the sheet-shaped reconstituted tobacco raw material discharged from the die. According to the twenty-fifth aspect, when it is determined that the measured temperature is lower than or equal to a predetermined value, it is possible to suppress formation of wrinkles by increasing the extrusion rate of the extruder.

A twenty-sixth aspect provides a manufacturing apparatus for a reconstituted tobacco sheet. The manufacturing apparatus for a reconstituted tobacco sheet includes a die that discharges reconstituted tobacco raw material in a sheet shape, and a take-up device that takes up the sheet-shaped reconstituted tobacco raw material discharged from the die, the take-up device includes a pair of first drive rollers sandwiching the sheet-shaped reconstituted tobacco raw material, and the take-up device is configured to take off the sheet-shaped reconstituted tobacco raw material while applying tension to the sheet-shaped reconstituted tobacco raw material.

The discharged sheet-shaped reconstituted tobacco raw material is heated and dried in a downstream process to be solidified, so the sheet-shaped reconstituted tobacco raw material discharged from the die is easily ripped. According to the twenty-sixth aspect, stable tension can be applied by sandwiching the sheet-shaped reconstituted tobacco raw material discharged from the die with the first drive rollers of the take-up device. Thus, even when wrinkles are formed in the sheet-shaped reconstituted tobacco raw material discharged from the die, the wrinkles can be stretched with the take-up device.

An outline of a twenty-seventh aspect is that, in the twenty-sixth aspect, the take-up device includes a pair of second drive rollers that take-up the sheet-shaped reconstituted tobacco raw material from the pair of first drive rollers while sandwiching the sheet-shaped reconstituted tobacco raw material, and a rotation speed of the second drive rollers is higher than a rotation speed of the first drive rollers.

According to the twenty-seventh aspect, since the sheet-shaped reconstituted tobacco raw material is taken off while being sandwiched by the first drive rollers and the second drive rollers higher in rotation speed than the first drive rollers, desired tension can be applied to the sheet-shaped reconstituted tobacco raw material by a difference in rotation speed between these pairs of drive rollers. Therefore, it is possible to appropriately stretch wrinkles by adjusting the rotation speed of the first drive rollers and the rotation speed of the second drive rollers according to the extent of wrinkles in the sheet-shaped reconstituted tobacco raw material.

An outline of a twenty-eighth aspect is that, in the twenty-sixth aspect or the twenty-seventh aspect, the take-up device includes a tension roller configured to apply tension to the sheet-shaped reconstituted tobacco raw material taken off by the pair of first drive rollers and movable in a predetermined direction, and a biasing member pressing the tension roller against the sheet-shaped reconstituted tobacco raw material.

According to the twenty-eighth aspect, it is possible to apply predetermined tension to the sheet-shaped reconstituted tobacco raw material with the tension roller and the biasing member.

An outline of a twenty-ninth aspect is that, in any one of the twenty-sixth aspect to the twenty-eighth aspect, the take-up device includes a direction change roller located upstream of the first drive rollers and changes a conveying direction of the sheet-shaped reconstituted tobacco raw material discharged from the die.

Ordinarily, a discharge port of a die is oriented downward in a vertical direction, so sheet-shaped reconstituted tobacco raw material is discharged downward in the vertical direction. According to the twenty-ninth aspect, a conveying direction of the sheet-shaped reconstituted tobacco raw material can be changed to, for example, a horizontal direction by the direction change roller, so it is possible to appropriately convey the sheet-shaped reconstituted tobacco raw material to a downstream take-up mechanism, such as the first drive rollers.

An outline of a thirtieth aspect is that, in any one of the twenty-sixth aspect to the twenty-ninth aspect, the take-up device includes a treatment roller located downstream of the first drive rollers and applies surface treatment to the sheet-shaped reconstituted tobacco raw material conveyed from the first drive rollers.

According to the thirtieth aspect, when the treatment roller applies surface treatment, such as perforating, uneven processing, embossing, and debossing, to sheet-shaped reconstituted tobacco raw material, it is possible to increase the surface area of the sheet-shaped reconstituted tobacco raw material. Thus, it is possible to increase a flavor or an aerosol that is generated when the sheet-shaped reconstituted tobacco raw material is heated. When surface treatment with the treatment roller is performed, there are concerns that the sheet-shaped reconstituted tobacco raw material is easily ripped. According to the thirtieth aspect, the treatment roller is located downstream of the first drive rollers, so application of tension by the first drive rollers to surface-treated sheet-shaped reconstituted tobacco raw material is avoided, with the result that ripping of the sheet-shaped reconstituted tobacco raw material can be suppressed.

An outline of a thirty-first aspect is that, in any one of the twenty-sixth aspect to the thirtieth aspect, the take-up device is configured to take off the sheet-shaped reconstituted tobacco raw material at room temperature.

In a case where the take-up device includes, for example, a heating roller, a drying roller, or the like, the amount of moisture in the sheet-shaped reconstituted tobacco raw material taken off changes, so the physical properties can change. In this case, a tensile strength varies over time, so there are concerns that there occurs a part where stress concentrates in the sheet-shaped reconstituted tobacco raw material and the sheet-shaped reconstituted tobacco raw material is easily ripped. According to the thirty-first aspect, since heating or drying is not actively performed in the take-up device, it is possible to take off the sheet-shaped reconstituted tobacco raw material while applying tension to the sheet-shaped reconstituted tobacco raw material in a state where physical properties are less likely to change. Therefore, it is possible to stretch wrinkles while suppressing ripping of the sheet-shaped reconstituted tobacco raw material.

An outline of a thirty-second aspect is that, in any one of the twenty-sixth aspect to the thirty-first aspect, a control device that controls driving of the pair of first drive rollers and a sheet sensor that is communicably connected to the control device and that measures a flow rate of the sheet-shaped reconstituted tobacco raw material discharged from a die are provided, and the control device is configured to control a rotation speed of the pair of first drive rollers based on flow rate data measured by the sheet sensor.

According to the thirty-second aspect, it is possible to apply desired tension to the sheet-shaped reconstituted tobacco raw material while controlling the rotation speed of the first drive rollers according to a flow rate.

An outline of a thirty-third aspect is that, in any one of the twenty-sixth aspect to the thirty-second aspect, a control device that controls driving of the pair of first drive rollers and a tension sensor that is communicably connected to the control device and that measures tension applied to the sheet-shaped reconstituted tobacco raw material discharged from the die are provided, and the control device is configured to control a rotation speed of the pair of first drive rollers based on tension data measured by the tension sensor.

According to the thirty-third aspect, it is possible to apply desired tension to the sheet-shaped reconstituted tobacco raw material by controlling the rotation speed of the first drive rollers according to tension actually applied to the sheet-shaped reconstituted tobacco raw material.

A thirty-fourth aspect provides a manufacturing method for a reconstituted tobacco sheet. The manufacturing method for a reconstituted tobacco sheet includes discharging the reconstituted tobacco raw material from a die in a sheet shape, taking off the sheet-shaped reconstituted tobacco raw material by sandwiching the sheet-shaped reconstituted tobacco raw material with a pair of first drive rollers, and applying tension to the sheet-shaped reconstituted tobacco raw material.

A discharged tobacco sheet is heated and dried to be solidified in a downstream process, so the tobacco sheet discharged from the die is easily ripped. According to the thirty-fourth aspect, stable tension can be applied by sandwiching the sheet-shaped reconstituted tobacco raw material discharged from the die with the first drive rollers. Thus, even when wrinkles are formed in the sheet-shaped reconstituted tobacco raw material discharged from the die, the wrinkles can be stretched.

An outline of a thirty-fifth aspect is that, in the thirty-fourth aspect, the sheet-shaped reconstituted tobacco raw material from the pair of first drive rollers is taken off while being sandwiched by a pair of second drive rollers, and a rotation speed of the second drive rollers is higher than a rotation speed of the first drive rollers.

According to the thirty-fifth aspect, since the sheet-shaped reconstituted tobacco raw material is taken off while being sandwiched by the first drive rollers and the second drive rollers higher in rotation speed than the first drive rollers, desired tension can be applied to the sheet-shaped reconstituted tobacco raw material by a difference in rotation speed between these pairs of drive rollers. Therefore, it is possible to appropriately stretch wrinkles by adjusting the rotation speed of the first drive rollers and the rotation speed of the second drive rollers according to the extent of wrinkles in the sheet-shaped reconstituted tobacco raw material.

An outline of a thirty-sixth aspect is that, in the thirty-fourth aspect or the thirty-fifth aspect, tension is applied with a tension roller to the sheet-shaped reconstituted tobacco raw material taken off by the pair of first drive rollers by pressing the tension roller against the sheet-shaped reconstituted tobacco raw material.

According to the thirty-sixth aspect, it is possible to apply predetermined tension to the sheet-shaped reconstituted tobacco raw material with the tension roller.

An outline of a thirty-seventh aspect is that, in any one of the thirty-fourth aspect to the thirty-sixth aspect, a conveying direction of the sheet-shaped reconstituted tobacco raw material discharged from the die is changed upstream of the first drive rollers.

Ordinarily, a discharge port of a die is oriented downward in a vertical direction, so sheet-shaped reconstituted tobacco raw material is discharged downward in the vertical direction. According to the thirty-seventh aspect, a conveying direction of the sheet-shaped reconstituted tobacco raw material can be changed to, for example, a horizontal direction, so it is possible to appropriately convey the sheet-shaped reconstituted tobacco raw material to a downstream take-up mechanism, such as the first drive rollers.

An outline of a thirty-eighth aspect is that, in any one of the thirty-fourth aspect to the thirty-seventh aspect, surface treatment is applied to the sheet-shaped reconstituted tobacco raw material conveyed from the first drive rollers downstream of the first drive rollers.

According to the thirty-eighth aspect, when surface treatment, such as perforating, uneven processing, embossing, and debossing, is applied to sheet-shaped reconstituted tobacco raw material, it is possible to increase the surface area of the sheet-shaped reconstituted tobacco raw material. Thus, it is possible to increase a flavor or an aerosol that is generated when the sheet-shaped reconstituted tobacco raw material is heated.

An outline of a thirty-ninth aspect is that, in any one of the thirty-fourth aspect to the thirty-eighth aspect, the sheet-shaped reconstituted tobacco raw material is taken off by the first drive rollers at room temperature.

In a case where the take-up process includes, for example, a heating process, a drying process, or the like, the amount of moisture in the sheet-shaped reconstituted tobacco raw material taken off changes, so the physical properties can change. In this case, a tensile strength varies over time, so there are concerns that there occurs a part where stress concentrates in the sheet-shaped reconstituted tobacco raw material and the sheet-shaped reconstituted tobacco raw material is easily ripped. According to the thirty-ninth aspect, since heating or drying is not actively performed in the take-up process, it is possible to take off the sheet-shaped reconstituted tobacco raw material while applying tension to the sheet-shaped reconstituted tobacco raw material in a state where physical properties are less likely to change. Therefore, it is possible to stretch wrinkles while suppressing ripping of the sheet-shaped reconstituted tobacco raw material.

An outline of a fortieth aspect is that, in any one of the thirty-fourth aspect to the thirty-ninth aspect, a flow rate of the sheet-shaped reconstituted tobacco raw material discharged from the die is measured, and a rotation speed of the first drive rollers is controlled based on measured flow rate data.

According to the fortieth aspect, it is possible to apply desired tension to the sheet-shaped reconstituted tobacco raw material while controlling the rotation speed of the first drive rollers according to a flow rate.

An outline of a forty-first aspect is that, in any one of the thirty-fourth aspect to the fortieth aspect, tension applied to the sheet-shaped reconstituted tobacco raw material discharged from the die is measured, and a rotation speed of the first drive rollers is controlled based on measured tension data.

According to the forty-first aspect, it is possible to apply desired tension to the sheet-shaped reconstituted tobacco raw material by controlling the rotation speed of the first drive rollers according to tension actually applied to the sheet-shaped reconstituted tobacco raw material.

### BRIEF DESCRIPTION OF DRAWINGS

[Fig. 1] Fig. 1 is a schematic side sectional view of a manufacturing apparatus for a reconstituted tobacco sheet according to an embodiment.
[Fig. 2] Fig. 2 is a side view when a die shown in Fig. 1 is viewed from a discharge port side.
[Fig. 3] Fig. 3 is a side view of the die and a sheet-shaped reconstituted tobacco raw material, taken along the line 3-3 in Fig. 1.
[Fig. 4] Fig. 4 is a side view of the die and the sheet-shaped reconstituted tobacco raw material, taken along the line 3-3 in Fig. 1 according to another embodiment.
[Fig. 5] Fig. 5 is a flowchart that shows a manufacturing method for a reconstituted tobacco sheet.
[Fig. 6] Fig. 6 is a schematic side sectional view of a take-up device.

### DESCRIPTION OF EMBODIMENTS

Hereinafter, an embodiment of the present invention will be described with reference to the drawings. In the drawings described below, like reference signs denote the same or corresponding structural elements, and the description will not be repeated. In the specification, a "discharge direction" means a direction in which sheet-shaped reconstituted tobacco raw material is discharged from a die or a direction in which sheet-shaped reconstituted tobacco raw material is conveyed. In the specification, a "width direction" means a direction orthogonal to the discharge direction.

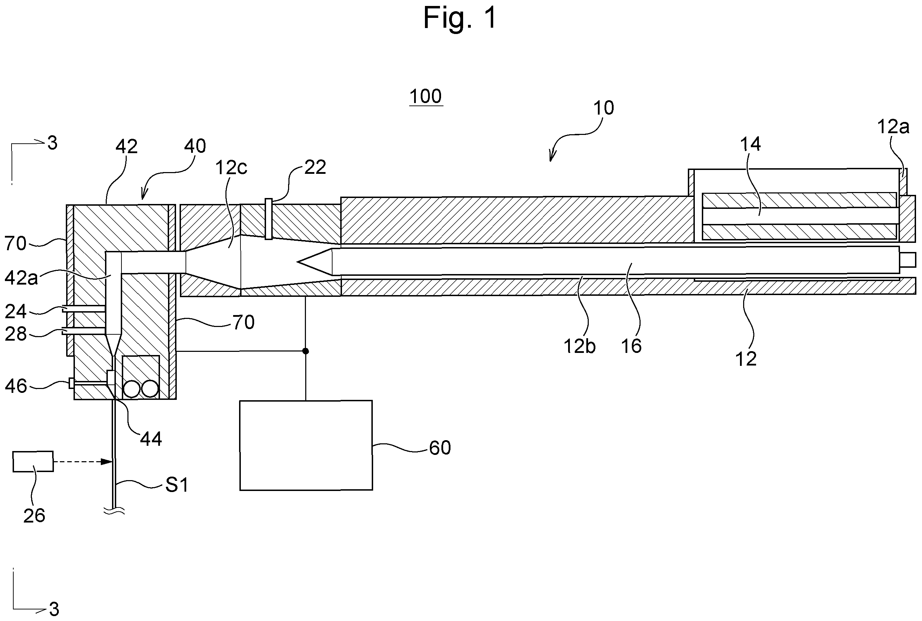

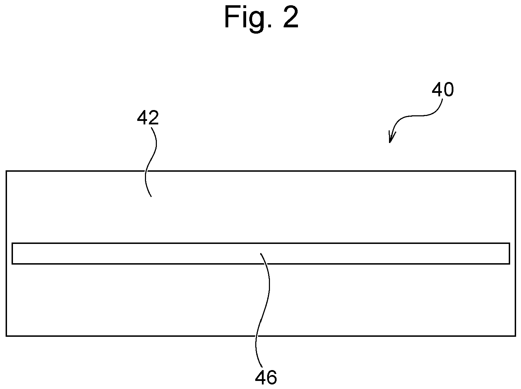

Fig. 1 is a schematic side sectional view of a manufacturing apparatus for a reconstituted tobacco sheet according to the present embodiment. Fig. 2 is a side view when a die shown in Fig. 1 is viewed from a discharge port side. As shown in Fig. 1, a manufacturing apparatus 100 for a reconstituted tobacco sheet according to the present embodiment includes a die 40 that discharges reconstituted tobacco raw material in a sheet shape. The manufacturing apparatus 100 for a reconstituted tobacco sheet can further include an extruder 10 configured to extrude reconstituted tobacco raw material to the die 40.

The extruder 10 can include a housing 12, a drawing screw 14, and an extrusion screw 16. The drawing screw 14 is configured to rotate to extrude reconstituted tobacco raw material in a direction orthogonal to a rotation axis of the drawing screw 14. The extrusion screw 16 is configured to rotate to extrude reconstituted tobacco raw material in a direction parallel to a rotation axis of the extrusion screw 16. The housing 12 can be made of a tough material, such as a metal, for example, SUS. The housing 12 has an input port 12a, a conveying space 12b, and a chamber 12c inside. The input port 12a is open upward and accommodates the drawing screw 14 inside. The conveying space 12b accommodates the extrusion screw 16. When reconstituted tobacco raw material is put into the input port 12a, the put-in reconstituted tobacco raw material is drawn into the conveying space 12b by rotation of the drawing screw 14. In the conveying space 12b, reconstituted tobacco raw material is extruded into the chamber 12c while being kneaded by the extrusion screw 16. Reconstituted tobacco raw material extruded by the extrusion screw 16 passes through the chamber 12c and is extruded to the die 40. A discharge rate of reconstituted tobacco raw material discharged from the die 40 can be determined depending on the rotation speed of the extrusion screw 16.

Here, reconstituted tobacco raw material is a kneaded product including at least one material selected from among polysaccharides (such as starch and dextrin), water or alcohol (such as ethanol and propylene glycol) or at least one material selected by him or herself as a selected liquid medium, and strips or granules of a tobacco plant. Reconstituted tobacco raw material is not limited to the above-described ones and may contain another material.

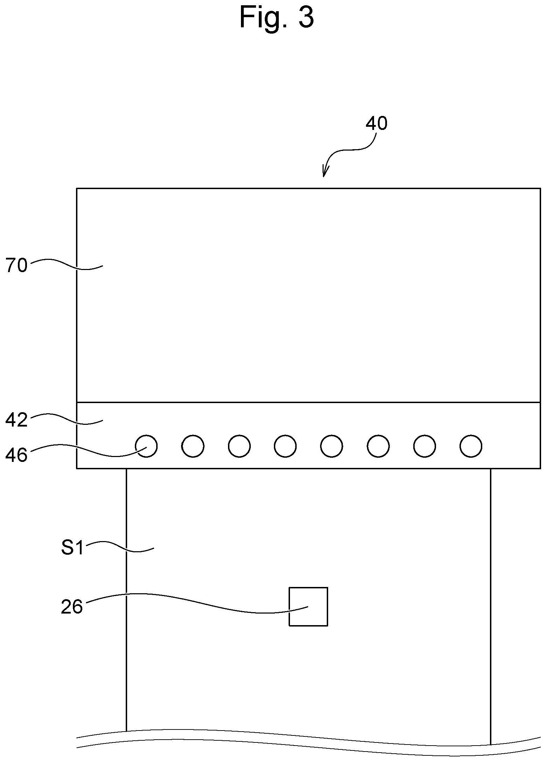

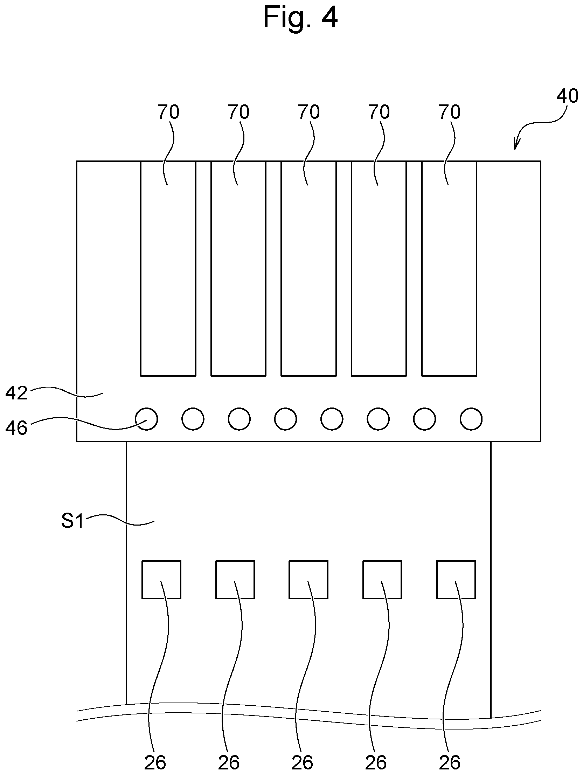

The die 40 includes a housing 42 and a discharge port 44 that discharges sheet-shaped reconstituted tobacco raw material S1. The housing 42 can be made of a tough material, such as a metal, for example, SUS. The housing 42 has a chamber 42a inside. The chamber 42a communicates with the discharge port 44. The die 40 can further include an adjustment tool 46 for adjusting the thickness of the discharge port 44. The adjustment tool 46 can be, for example, a tool, such as a bolt, for adjusting the shape of a nozzle part of the housing 42. The nozzle part defines the discharge port 44. A plurality of the adjustment tools 46 can be provided in the width direction (a sheet depth direction in Fig. 1) of the die 40 (see Figs. 3 and 4 (described later)). As shown in Fig. 2, the discharge port 44 can have a slot shape. Here, the "slot shape" is not limited a specific hole shape and can be a selected shape having a predetermined longitudinal direction. The discharge port 44 is disposed such that the longitudinal direction is oriented in the width direction (the sheet depth direction in Fig. 1) of the die 40.

As described above, at the time of discharging the sheet-shaped reconstituted tobacco raw material S1 from the die 40, if the flow rate is not uniform in the discharge direction or in the width direction orthogonal to the discharge direction, there are concerns that wrinkles are formed in the discharged sheet-shaped reconstituted tobacco raw material S1. In the present embodiment, the manufacturing apparatus 100 for a reconstituted tobacco sheet preferably includes a temperature adjustment device 70 that adjusts the temperature of reconstituted tobacco raw material passing through the die 40. It is found that one of causes of formation of wrinkles of the sheet-shaped reconstituted tobacco raw material S1 discharged from the die 40 is a flowability of raw material. Specifically, when the flowability of raw material is low, the flow rate can be not uniform in a discharge direction or in a width direction. For this reason, in an example, the temperature adjustment device 70 can include a heating device that heats reconstituted tobacco raw material passing through the die 40. In this case, it is possible to decrease the viscosity of reconstituted tobacco raw material, that is, increase the flowability of reconstituted tobacco raw material, by heating the reconstituted tobacco raw material passing through the die 40 with the temperature adjustment device 70. Alternatively, it is possible to uniform a discharge flow rate in the width direction by partially heating a part with a small discharge amount with the temperature adjustment device 70 to partially increase the discharge flow rate. As a result, it is possible to suppress formation of wrinkles in the sheet-shaped reconstituted tobacco raw material S1. Wrinkles may be formed when there is a part where a discharge flow rate is high in the width direction of the sheet-shaped reconstituted tobacco raw material S1. In an example, the temperature adjustment device 70 can include a cooling device that cools reconstituted tobacco raw material passing through the die 40. In this case, it is possible to uniform the discharge flow rate in the width direction by partially cooling the part where the discharge flow rate is high with the temperature adjustment device 70. As a result, it is possible to suppress formation of wrinkles in the sheet-shaped reconstituted tobacco raw material S1.

In a case where the temperature adjustment device 70 includes a heating device, the heating device is preferably configured to heat reconstituted tobacco raw material such that the temperature of the reconstituted tobacco raw material passing through the die 40 becomes lower than 100°C. In this case, it is possible to suppress formation of wrinkles in the sheet-shaped reconstituted tobacco raw material S1 by increasing the flowability of reconstituted tobacco raw material while suppressing condensation of moisture contained in the reconstituted tobacco raw material at the discharge port 44 of the die 40 as a result of vaporization.

As shown in Fig. 1, the temperature adjustment device 70 is preferably mounted to the die 40. In this case, the temperature adjustment device 70 is capable of directly adjusting via the die 40 the temperature of reconstituted tobacco raw material passing through the die 40, so it is possible to further efficiently adjust the temperature of the reconstituted tobacco raw material. In the example shown in Fig. 1, the temperature adjustment device 70 can be mounted so as to be in contact with the surface of the housing 42 of the die 40. More specifically, the temperature adjustment device 70 is preferably mounted so as to be in contact with the surface of the housing 42 and place the chamber 42a of the die 40 in between. The temperature adjustment device 70 may be mounted to the extruder 10. For example, in a case where it is not possible to sufficiently heat reconstituted tobacco raw material during passage of the die 40, the reconstituted tobacco raw material passing through the extruder 10 may be heated with the temperature adjustment device 70 mounted to the extruder 10.

As shown in Fig. 1, the manufacturing apparatus 100 for a reconstituted tobacco sheet preferably further includes a control device 60 configured to control operation of the temperature adjustment device 70. In this case, the operation of the temperature adjustment device 70 can be controlled by the control device 60, so it is possible to control the operation of the temperature adjustment device 70 such that formation of wrinkles is suppressed according to formation of the wrinkles. The control device 60 can be configured to be communicable with the temperature adjustment device 70.

The manufacturing apparatus 100 for a reconstituted tobacco sheet preferably includes a temperature sensor 24 (which corresponds to an example of the first sensor) that is communicably connected to the control device 60 and that measures the temperature of reconstituted tobacco raw material passing through the die 40. In this case, the control device 60 controls the operation of the temperature adjustment device 70 based on measured data of the temperature sensor 24. For example, when the temperature measured by the temperature sensor 24 is lower than a predetermined value, it is estimated that the viscosity of the reconstituted tobacco raw material passing through the die 40 is high, so the control device 60 can suppress formation of wrinkles by controlling the temperature adjustment device 70 such that the temperature of the reconstituted tobacco raw material increases. For example, when the temperature measured by the temperature sensor 24 is higher than a predetermined value, for example, higher than or equal to 100°C, the control device 60 is capable of suppressing occurrence of a state change, such as vaporization, of the reconstituted tobacco raw material or a chemical change of the reconstituted tobacco raw material by controlling the temperature adjustment device 70 such that the temperature of the reconstituted tobacco raw material decreases. As shown in Fig. 1, in the present embodiment, to further accurately measure the temperature of reconstituted tobacco raw material in the chamber 42a of the die 40, at least part of the temperature sensor 24 can be embedded in the housing 42 or exposed to the chamber 42a.

The control device 60 may control the operation of the temperature adjustment device 70 based on temperature data received from a temperature or pressure sensor 22 (described later) that measures the temperature or pressure of reconstituted tobacco raw material passing through the chamber 12c.

The manufacturing apparatus 100 for a reconstituted tobacco sheet preferably includes the temperature or pressure sensor 22 (which corresponds to an example of the second sensor) that is communicably connected to the control device 60 and that measures a temperature or pressure in the chamber 12c of the extruder 10. In this case, the control device 60 controls the operation of the temperature adjustment device 70 based on measured data of the temperature or pressure sensor 22. Specifically, when the temperature in the chamber 12c is lower than a predetermined value or when the pressure in the chamber 12c is higher than a predetermined value, it is estimated that the viscosity of the reconstituted tobacco raw material is high. In this case, there is a possibility that backflow of the reconstituted tobacco raw material from the die 40 to the extruder 10 can occur. Furthermore, in this case, dispersion of raw material inside the die 40 (that is, the chamber 42a) is not facilitated, there is a possibility that uniform discharge of the reconstituted tobacco raw material from the die 40 becomes difficult. For this reason, for example, when the temperature in the chamber 12c is lower than a predetermined value or when the pressure in the chamber 12c is higher than a predetermined value, the control device 60 is capable of controlling the operation of the temperature adjustment device 70 such that the reconstituted tobacco raw material is heated to decrease the viscosity. For example, when the temperature in the chamber 12c is higher than a predetermined value, for example, higher than or equal to 100°C, the control device 60 is capable of suppressing occurrence of a state change, such as vaporization, of the reconstituted tobacco raw material or a chemical change of the reconstituted tobacco raw material by controlling the temperature adjustment device 70 such that the temperature of the reconstituted tobacco raw material decreases.

Furthermore, the manufacturing apparatus 100 for a reconstituted tobacco sheet preferably includes a sheet sensor 26 (which corresponds to an example of the third sensor) that is communicably connected to the control device 60 and that measures an appearance, flow rate, or sheet thickness of sheet-shaped reconstituted tobacco raw material discharged from the die 40. In this case, the control device 60 controls the operation of the temperature adjustment device 70 based on measured data of the sheet sensor 26.

Fig. 3 is a side view of the die 40 and the sheet-shaped reconstituted tobacco raw material S1, taken along the line 3-3 in Fig. 1. In the example shown in Fig. 3, the manufacturing apparatus 100 for a reconstituted tobacco sheet includes the single temperature adjustment device 70 provided on one face of the housing 42 of the die 40 and the single sheet sensor 26. In this case, the sheet sensor 26 measures the appearance, the flow rate, or the sheet thickness, with the result that it is possible to detect whether wrinkles are formed in the sheet-shaped reconstituted tobacco raw material S1. Specifically, the control device 60 can detect formation of wrinkles based on measured data on the appearance with the sheet sensor 26. The control device 60 receives measured data on the flow rate or sheet thickness in a predetermined range, to be measured by the sheet sensor 26 and can determine that wrinkles are formed when a fluctuation range of the sheet thickness or flow rate in a predetermined time falls outside the predetermined range. In this way, when the control device 60 detects formation of wrinkles, the control device 60 is capable of suppressing formation of wrinkles by controlling the temperature adjustment device 70 such that reconstituted tobacco raw material passing through the die 40 is heated or cooled.

Fig. 4 is a side view of the die 40 and the sheet-shaped reconstituted tobacco raw material S1, taken along the line 3-3 in Fig. 1 according to another embodiment. As in the case of the example shown in Fig. 4, the manufacturing apparatus 100 for a reconstituted tobacco sheet preferably includes a plurality of (five in the drawing) temperature adjustment devices 70 mounted to the die 40 along the longitudinal direction of the discharge port 44 (the width direction of the die 40) and controllable independently of one another. In this case, in the longitudinal direction of the discharge port 44 of the die 40, that is, in the width direction orthogonal to the discharge direction, it is possible to partially adjust the temperature of reconstituted tobacco raw material passing through the die 40. Therefore, when the flow rate is not uniform in the width direction, it is possible to suppress formation of wrinkles in the discharged sheet-shaped reconstituted tobacco raw material S1 by partially adjusting the temperature (that is, viscosity) of reconstituted tobacco.

In this case, the control device 60 controls the operation of at least one of the plurality of temperature adjustment devices 70 based on measured data of the sheet sensor 26. The sheet sensor 26 measures the appearance, the flow rate, or the sheet thickness, with the result that it is possible to detect whether wrinkles are formed in the sheet-shaped reconstituted tobacco raw material S1. Specifically, the control device 60 can detect formation of wrinkles based on measured data on the appearance with the sheet sensor 26. The control device 60 receives measured data on the flow rate or sheet thickness with the sheet sensor 26 and can determine that wrinkles are formed when a fluctuation range of the sheet thickness or flow rate in a predetermined time falls outside a predetermined range. In this way, when the control device 60 detects formation of wrinkles, it is possible to suppress formation of wrinkles by, for example, heating or cooling the reconstituted tobacco raw material passing through the die 40.

As shown in Fig. 4, in a case where the manufacturing apparatus 100 for a reconstituted tobacco sheet includes the plurality of temperature adjustment devices 70, the manufacturing apparatus 100 may include the single sheet sensor 26 and preferably includes a plurality of the sheet sensors 26. Specifically, the manufacturing apparatus 100 for a reconstituted tobacco sheet can include a plurality of sheet sensors 26 arranged along the width direction of the sheet-shaped reconstituted tobacco raw material S1. In this case, the control device 60 controls the operation of at least one of the plurality of temperature adjustment devices 70 based on measured data of the plurality of sheet sensors 26. As shown in the drawing, in a case where the manufacturing apparatus 100 for a reconstituted tobacco sheet includes the plurality of temperature adjustment devices 70, the manufacturing apparatus 100 preferably includes sheet sensors 26 in the same number as the number of the temperature adjustment devices 70. In this case, the plurality of third sensors 26 is disposed along the width direction as shown in Fig. 4 to measure the thickness or flow rate of the sheet-shaped reconstituted tobacco raw material S1 at multiple points in the width direction, with the result that the control device 60 can detect a part where the sheet is thick (a part where the flow rate is high) or a part where the sheet is thin (a part where the flow rate is low) in the width direction. The control device 60 is capable of suppressing formation of wrinkles by controlling at least one of the temperature adjustment devices 70, corresponding to any one of the plurality of sheet sensors 26 having measured the thick part or thin part of the sheet in the width direction according to this detection result.

As described above, the control device 60 controls the operation of the temperature adjustment device 70 to reduce wrinkles in the sheet-shaped reconstituted tobacco raw material S1 discharged from the die 40. Not limited to this, the control device 60 can reduce wrinkles in the sheet-shaped reconstituted tobacco raw material S1 discharged from the die 40 by controlling the operation of the extruder 10.

As shown in Fig. 1, the control device 60 can be communicably connected to the extruder 10. The control device 60 preferably controls the operation of the extruder 10. In this case, the control device 60 can control an extrusion rate of the extruder 10 based on measured data of the sheet sensor 26. As described above, it is found that wrinkles are formed in the sheet-shaped reconstituted tobacco raw material S1 when material is not uniformly dispersed inside the die 40 and the flow rate is not uniform in the discharge direction or in the width direction. For this reason, when wrinkles are formed in the sheet-shaped reconstituted tobacco raw material S1, the pressure inside the die 40 (that is, the chamber 42a) is increased and raw material is uniformly dispersed by increasing the extrusion rate of the extruder 10. As a result, formation of wrinkles in the sheet-shaped reconstituted tobacco raw material S1 is suppressed.

The sheet sensor 26 measures the appearance, the flow rate, or the sheet thickness, with the result that it is possible to detect whether wrinkles are formed in the sheet-shaped reconstituted tobacco raw material S1. Specifically, the control device 60 determines whether wrinkles are formed in the sheet-shaped reconstituted tobacco raw material S1 based on the appearance measured by the sheet sensor 26 and increases the extrusion rate of the extruder 10 when the control device 60 determines that the wrinkles are formed. The control device 60 determines whether wrinkles are formed in the sheet-shaped reconstituted tobacco raw material S1 by applying, for example, a known image analysis or the like to the appearance measured by the sheet sensor 26. Thus, the control device 60 is capable of suppressing formation of wrinkles by increasing the extrusion rate of the extruder 10.

The control device 60 can increase the extrusion rate of the extruder 10 when the control device 60 determines that a fluctuation range of the sheet thickness or flow rate measured by the sheet sensor 26 in a predetermined time falls outside a predetermined range. The control device 60 understands that the flow rate is not uniform in the discharge direction of the sheet when a fluctuation range of the thickness or flow rate measured by the sheet sensor 26 falls outside a predetermined range, and determines that wrinkles are formed. In this way, the control device 60 is capable of suppressing formation of wrinkles by increasing the extrusion rate of the extruder 10 when a fluctuation range of the thickness or flow rate measured by the sheet sensor 26 falls outside a predetermined range.

The sheet sensor 26 is preferably configured to measure a thickness or flow rate of the sheet-shaped reconstituted tobacco raw material S1 discharged from the die 40 at multiple points in the width direction. Specifically, for example, the sheet sensor 26 may include a plurality of sheet sensors 26 as shown in Fig. 4, and a thickness or flow rate at multiple points in the width direction may be measured with the single sheet sensor 26. In this case, the control device 60 increases the extrusion rate of the extruder 10 based on a thickness or flow rate at multiple points, measured by the sheet sensor 26. The sheet sensor 26 measures the thickness or flow rate of the sheet-shaped reconstituted tobacco raw material S1 at multiple points in the width direction, with the result that the control device 60 can detect a part where the sheet is thick (a part where the flow rate is high) or a part where the sheet is thin (a part where the flow rate is low) in the width direction. The control device 60 understands that wrinkles are formed, for example, "when a part thicker than or thinner than a predetermined thickness is detected", "when a difference in thickness between selected two points of multiple points falls outside a predetermined numeric range", "when a difference between an average value and a maximum value or a minimum value of thicknesses at multiple points falls outside a predetermined numeric range", "when a distribution of thicknesses at multiple points falls outside a predetermined range", or the like, and is capable of suppressing formation of wrinkles by increasing the extrusion rate of the extruder 10.

As shown in Fig. 1, the manufacturing apparatus 100 for a reconstituted tobacco sheet preferably includes a pressure sensor 28 that is communicably connected to the control device 60 and that is configured to measure a pressure inside the die 40. The temperature or pressure sensor 22 and the pressure sensor 28 function as a sensor configured to measure a pressure in the die 40 or the extruder 10. In this case, the control device 60 preferably decreases the extrusion rate of the extruder 10 when the control device 60 determines that a pressure measured by the temperature or pressure sensor 22 or the pressure sensor 28 is higher than or equal to a predetermined value. When the pressure inside the die 40 or the extruder 10 is excessively high, there are concerns about occurrence of backflow from the die 40 to the extruder 10. For example, in a case where the control device 60 has suppressed formation of wrinkles by increasing the extrusion rate of the extruder 10 based on measured data of the sheet sensor 26 as described above, there is a possibility that the pressure inside the die 40 or the extruder 10 can excessively increase. The control device 60 is capable of stabilizing a discharge status by decreasing the extrusion rate of the extruder 10 when the control device 60 determines that a pressure measured by the temperature or pressure sensor 22 or the pressure sensor 28 is higher than or equal to a predetermined value. In a case where a pressure measured by the temperature or pressure sensor 22 or the pressure sensor 28 is high, it is possible to decrease the viscosity by heating reconstituted tobacco raw material inside the die 40 with the temperature adjustment device 70 to decrease the pressure. However, for example, in a case where reconstituted tobacco raw material has been already sufficiently heated by the temperature adjustment device 70, it is particularly effective to decrease the extrusion rate of the extruder 10.

As shown in Fig. 1, the manufacturing apparatus 100 for a reconstituted tobacco sheet includes the temperature or pressure sensor 22 and the temperature sensor 24. The temperature or pressure sensor 22 and the temperature sensor 24 function as a sensor configured to measure the temperature of reconstituted tobacco raw material passing through the die 40 or the extruder 10. In this case, the control device 60 preferably increases the extrusion rate of the extruder 10 when the control device 60 determines that a temperature measured by the temperature or pressure sensor 22 or the temperature sensor 24 is lower than or equal to a predetermined value. In general, when the extrusion rate of the extruder 10 is increased, the temperature of the reconstituted tobacco raw material also increases. When the temperature of the reconstituted tobacco raw material passing through the die 40 or the extruder 10 is lower than or equal to a predetermined value, it is presumable that the viscosity of the reconstituted tobacco raw material inside the die 40 or the extruder 10 is high or the extrusion rate is low, with the result that there is a possibility that wrinkles can be formed in the sheet-shaped reconstituted tobacco raw material S1 discharged from the die 40. For this reason, when the control device 60 determines that the temperature measured by the temperature or pressure sensor 22 or the temperature sensor 24 is lower than or equal to a predetermined value, it is possible to suppress formation of wrinkles by increasing the extrusion rate of the extruder 10.

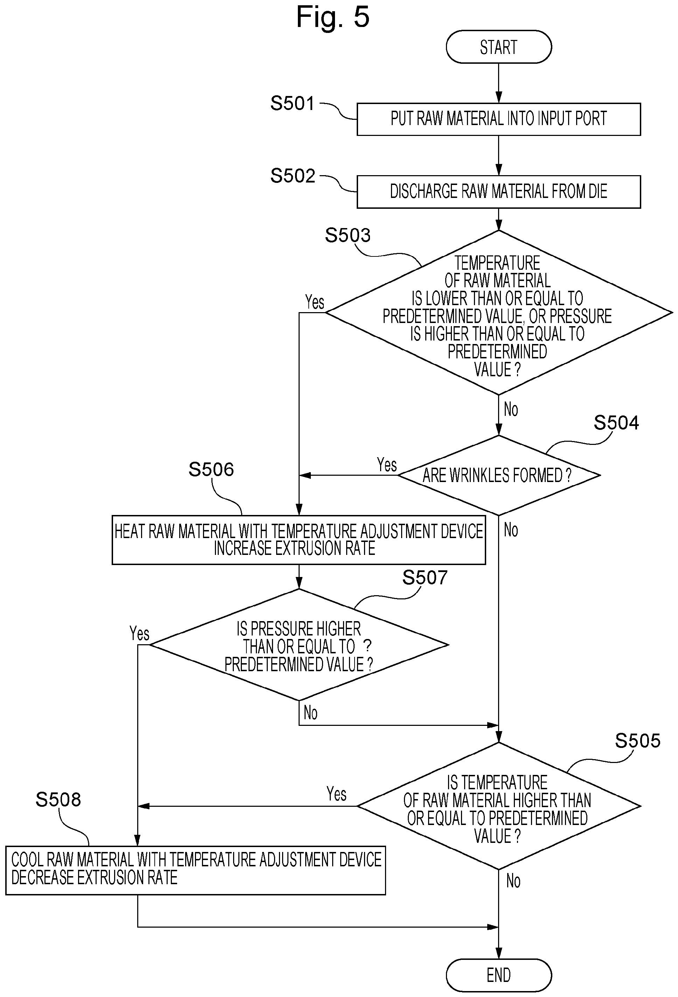

Next, a manufacturing method for a reconstituted tobacco sheet in the manufacturing apparatus 100 for a reconstituted tobacco sheet, described above, will be described. The manufacturing method for a reconstituted tobacco sheet according to the present embodiment includes adjusting the temperature of reconstituted tobacco raw material passing through the die 40, and discharging the reconstituted tobacco raw material from the die 40 in a sheet shape. Alternatively, the manufacturing method for a reconstituted tobacco sheet includes supplying reconstituted tobacco raw material to the extruder 10, extruding the reconstituted tobacco raw material to the die 40 with the extruder 10, discharging the reconstituted tobacco raw material from the die 40 in a sheet shape, measuring an appearance, flow rate, or sheet thickness of the sheet-shaped reconstituted tobacco raw material S1 discharged from the die 40, and controlling an extrusion rate of the extruder 10 based on a measurement result of the appearance, flow rate, or sheet thickness of the reconstituted tobacco raw material. Fig. 5 is a flowchart that shows a manufacturing method for a reconstituted tobacco sheet.

As shown in Fig. 5, initially, reconstituted tobacco raw material is supplied to the extruder 10. Specifically, the reconstituted tobacco raw material is put into the input port 12a of the extruder 10 (step S501). Subsequently, the reconstituted tobacco raw material is extruded into the die 40 by the extruder 10. Specifically, the reconstituted tobacco raw material is extruded into the die 40 by the drawing screw 14 and the extrusion screw 16 of the extruder 10 and is discharged from the die 40 in a sheet shape (step S502). Here, the control device 60 of the manufacturing apparatus 100 for a reconstituted tobacco sheet can measure the temperature of reconstituted tobacco raw material passing through the die 40 or the extruder 10 with the temperature or pressure sensor 22 or the temperature sensor 24, receive temperature data from the temperature or pressure sensor 22 or the temperature sensor 24, and determine whether the temperature of the reconstituted tobacco raw material in the chamber 12c or the chamber 42a is lower than or equal to a predetermined value (step S503). Alternatively, the control device 60 can measure the pressure inside the die 40 or the extruder 10 with the temperature or pressure sensor 22 or the temperature sensor 24, receives pressure data from the temperature or pressure sensor 22 or the pressure sensor 28, determine whether the pressure in the chamber 12c or the chamber 42a is higher than or equal to a predetermined value (step S503).

In a case where the control device 60 determines that the temperature of reconstituted tobacco raw material in the chamber 12c or the chamber 42a is lower than or equal to a predetermined value or in a case where the control device 60 determines that the pressure in the chamber 12c or the chamber 42a is higher than or equal to a predetermined value (Yes in step S503), the control device 60 can control the temperature adjustment device 70 such that the temperature of the reconstituted tobacco raw material increases (step S506). Alternatively, in this case, the control device 60 can increase the extrusion rate of the extruder 10 (step S506). The control device 60 may perform both heating of reconstituted tobacco raw material with the temperature adjustment device 70 and increasing of the extrusion rate of the extruder 10 or may perform only one of them.

In a case where the control device 60 determines that the temperature of the reconstituted tobacco raw material in the chamber 12c or the chamber 42a is not lower than or equal to a predetermined value or in a case where the control device 60 determines that the pressure in the chamber 12c or the chamber 42a is not higher than or equal to a predetermined value (No in step S503), the control device 60 executes the process of step S504. In other words, the control device 60 receives data of the appearance, flow rate, or sheet thickness from the sheet sensor 26 and determines whether wrinkles are formed (step S504).

Specifically, in a case where the single sheet sensor 26 is provided as shown in Fig. 3, when a fluctuation range of the sheet thickness or flow rate in a predetermined time falls outside a predetermined range as described above, the control device 60 determines that wrinkles are formed. In a case where the plurality of sheet sensors 26 is provided as shown in Fig. 4, a thickness or flow rate of the sheet-shaped reconstituted tobacco raw material S1 discharged from the die 40 at multiple points in the width direction is measured as described above, and it is determined whether wrinkles are formed based on a measurement result. The control device 60 can determine whether wrinkles are formed based on appearance data received from the sheet sensor 26.

In a case where the control device 60 determines that wrinkles are formed (Yes in step S504), the control device 60 can control the temperature adjustment device 70 such that the temperature of the reconstituted tobacco raw material increases (step S506). Alternatively, in this case, the control device 60 can increase the extrusion rate of the extruder 10 (step S506). The control device 60 may perform both heating of reconstituted tobacco raw material with the temperature adjustment device 70 and increasing of the extrusion rate of the extruder 10 or may perform only one of them.

In a case where the extrusion rate of the extruder 10 is increased in step S506, the control device 60 can receive pressure data from the temperature or pressure sensor 22 or the pressure sensor 28 and determine whether the pressure in the chamber 12c or the chamber 42a is higher than or equal to a predetermined value (step S507). In a case where formation of wrinkles is suppressed by increasing the extrusion rate of the extruder 10 in step S506, there is a possibility that the pressure inside the die 40 or the extruder 10 excessively increases. Therefore, in a case where the control device 60 determines that the pressure in the chamber 12c or the chamber 42a is higher than or equal to a predetermined value (Yes in step S507), the control device 60 decreases the extrusion rate in step S508. The predetermined value here is a value higher than the predetermined value of step S503.

In a case where the control device 60 determines in step S504 that wrinkles are not formed (No in step S504), the control device 60 can receive temperature data from the temperature or pressure sensor 22 or the temperature sensor 24 and determine whether the temperature of the reconstituted tobacco raw material in the chamber 12c or the chamber 42a is higher than a predetermined value (step S505). The predetermined value here is a value different from the predetermined value in step S503 and is, for example, 100°C.

In a case where the control device 60 determines that the temperature of the reconstituted tobacco raw material in the chamber 12c or the chamber 42a is higher than or equal to a predetermined value (Yes in step S506), the control device 60 can control the temperature adjustment device 70 such that the temperature of the reconstituted tobacco raw material decreases (step S508). Alternatively, in this case, the control device 60 can decrease the extrusion rate of the extruder 10 (step S506). The control device 60 may perform both cooling of reconstituted tobacco raw material with the temperature adjustment device 70 and decreasing of the extrusion rate of the extruder 10 or may perform only one of them.

In the manufacturing apparatus 100 for a reconstituted tobacco sheet, the above-described step S501 to step S508 are repeated, and a reconstituted tobacco sheet with a relatively small amount of wrinkles is manufactured. Only any one of step S503 and step S504 may be executed. Step S505, step S507, and step 508 are optional and can be omitted as needed. In a case where two or more of step S503, step S504, and step S505 are executed, the order of them can be selected.

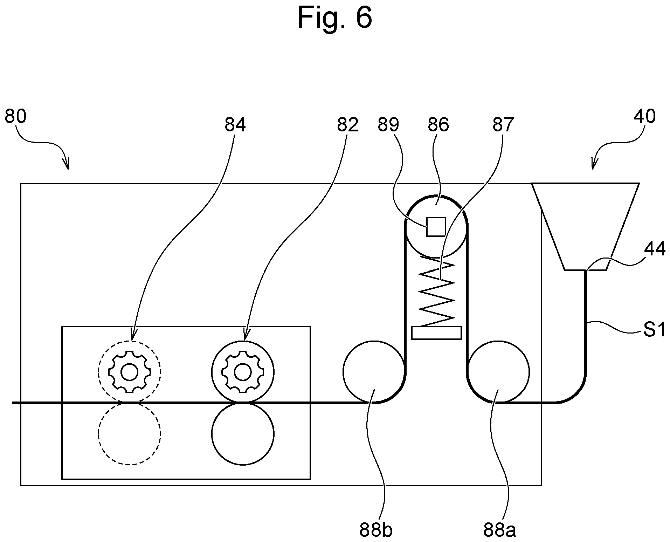

Next, a take-up device that can be provided in the manufacturing apparatus 100 for a reconstituted tobacco sheet will be described. Fig. 6 is a schematic side sectional view of the take-up device. As shown in Fig. 6, the take-up device 80 is configured to take up the sheet-shaped reconstituted tobacco raw material S1 discharged from the die 40 shown in Fig. 1 and the like. The take-up device 80 includes a pair of first drive rollers 82 that sandwich the sheet-shaped reconstituted tobacco raw material S1 and is configured to take up the sheet-shaped reconstituted tobacco raw material S1 while applying tension to the sheet-shaped reconstituted tobacco raw material S1. The discharged sheet-shaped reconstituted tobacco raw material S1 is heated and dried in a downstream process to be solidified, so the sheet-shaped reconstituted tobacco raw material S1 discharged from the die 40 is easily ripped. With the manufacturing apparatus 100 for a reconstituted tobacco sheet according to the present embodiment, stable tension can be applied by sandwiching the sheet-shaped reconstituted tobacco raw material S1 discharged from the die 40 with the first drive rollers 82 of the take-up device 80. Thus, even when wrinkles are formed in the sheet-shaped reconstituted tobacco raw material S1 discharged from the die 40, the wrinkles can be stretched with the take-off device 80. The take-up device 80 preferably takes up the sheet-shaped reconstituted tobacco raw material S1 in a horizontal direction from the viewpoint of conveyance, so the first drive rollers 82 preferably sandwiches the sheet-shaped reconstituted tobacco raw material S1 in the vertical direction.

As shown in the drawing, the take-up device 80 preferably includes a pair of second drive rollers 84 that take up the sheet-shaped reconstituted tobacco raw material S1 from the pair of first drive rollers 82 while sandwiching the sheet-shaped reconstituted tobacco raw material S1. The rotation speed of the second drive rollers 84 is set so as to be higher than the rotation speed of the first drive rollers 82. In this case, since the sheet-shaped reconstituted tobacco raw material S1 is taken off while being sandwiched by the first drive rollers 82 and the second drive rollers 84 higher in rotation speed than the first drive rollers 82, desired tension can be applied to the sheet-shaped reconstituted tobacco raw material S1 by a difference in rotation speed between these pairs of drive rollers. Therefore, it is possible to appropriately stretch wrinkles by adjusting the rotation speed of the first drive rollers 82 and the rotation speed of the second drive rollers 84 according to the extent of wrinkles in the sheet-shaped reconstituted tobacco raw material S1. The second drive rollers 84 have rotation axes parallel to the first drive rollers 82. As a result, the sheet-shaped reconstituted tobacco raw material S1 is taken off in the horizontal direction while being applied with tension by the first drive rollers 82 and the second drive rollers 84. The first drive rollers 82 and the second drive rollers 84 of the take-up device 80 may be controlled in operation by the above-described control device 60, or a control device that controls the take-up device 80 and that is different from the control device 60 may be provided.

The take-up device 80 preferably includes a treatment roller that is located downstream of the first drive rollers 82 and that applies surface treatment to the sheet-shaped reconstituted tobacco raw material S1 conveyed from the first drive rollers 82. In this case, when the treatment roller applies surface treatment, such as perforating, uneven processing, embossing, and debossing, to the sheet-shaped reconstituted tobacco raw material S1, it is possible to increase the surface area of the sheet-shaped reconstituted tobacco raw material S1. Thus, it is possible to increase a flavor or an aerosol that is generated when the sheet-shaped reconstituted tobacco raw material S1 is heated. When surface treatment with the treatment roller is performed, there are concerns that the sheet-shaped reconstituted tobacco raw material S1 is easily ripped. In the present embodiment, the treatment roller is located downstream of the first drive rollers 82, so application of tension by the first drive rollers 82 to the surface-treated sheet-shaped reconstituted tobacco raw material S1 is avoided, with the result that ripping of the sheet-shaped reconstituted tobacco raw material S1 can be suppressed. In the embodiment shown in Fig. 6, the second drive rollers 84 have the function of the treatment roller. However, not limited to this, a treatment roller may be provided separately from the second drive rollers 84.

As shown in the drawing, the take-up device 80 preferably includes a tension roller 86 movable in a predetermined direction, and a biasing member 87 that presses the tension roller 86 against the sheet-shaped reconstituted tobacco raw material S1. The tension roller 86 is configured to apply tension to the sheet-shaped reconstituted tobacco raw material S1 taken off by the pair of first drive rollers 82. Predetermined tension can be applied to the sheet-shaped reconstituted tobacco raw material S1 by the tension roller 86 and the biasing member 87. In the present embodiment, the biasing member 87 applies tension to the sheet-shaped reconstituted tobacco raw material S1 by biasing the tension roller 86 to the sheet-shaped reconstituted tobacco raw material S1 taken off in the horizontal direction from a vertically lower side toward a vertically upper side. By adjusting the spring constant of the biasing member 87, it is possible to easily adjust tension applied to the sheet-shaped reconstituted tobacco raw material S1. The tension roller 86 is configured to rotate about a rotation axis parallel to the first drive rollers 82.

The take-up device 80 preferably includes a first direction change roller 88a that is located upstream of the first drive rollers 82 and that changes the conveying direction of the sheet-shaped reconstituted tobacco raw material S1 discharged from the die 40. Ordinarily, as shown in Fig. 6, the discharge port 44 of the die 40 is oriented downward in the vertical direction, so the sheet-shaped reconstituted tobacco raw material S1 is discharged downward in the vertical direction. According to the present embodiment, the conveying direction of the sheet-shaped reconstituted tobacco raw material S1 can be changed to, for example, the horizontal direction by the first direction change roller 88a, so it is possible to appropriately convey the sheet-shaped reconstituted tobacco raw material S1 to a downstream take-up mechanism, such as the first drive rollers 82.

In the present embodiment, the sheet-shaped reconstituted tobacco raw material S1 is partially taken off in the vertical direction by the tension roller 86, so the take-up device 80 includes a second direction change roller 88b that changes the conveying direction of the sheet-shaped reconstituted tobacco raw material S1, to which tension is applied by the tension roller 86, to the horizontal direction again.

The take-up device 80 is preferably configured to take up the sheet-shaped reconstituted tobacco raw material S1 at room temperature. In a case where the take-up device 80 includes, for example, a heating roller, a drying roller, or the like, the amount of moisture in the sheet-shaped reconstituted tobacco raw material S1 taken off changes, so the physical properties can change. In this case, a tensile strength varies over time, so there are concerns that there occurs a part where stress concentrates in the sheet-shaped reconstituted tobacco raw material S1 and the sheet-shaped reconstituted tobacco raw material S1 is easily ripped. In the present embodiment, since heating or drying is not actively performed in the take-up device 80, it is possible to take up the sheet-shaped reconstituted tobacco raw material S1 while applying tension to the sheet-shaped reconstituted tobacco raw material S1 in a state where physical properties are less likely to change. Therefore, it is possible to stretch wrinkles while suppressing ripping of the sheet-shaped reconstituted tobacco raw material S1.

The control device 60 shown in Fig. 1 may control the rotation speed of the first drive rollers 82 based on flow rate data measured by the sheet sensor 26. In a case where the take-up device 80 includes the second drive rollers 84, the control device 60 may control the rotation speed of at least one pair of the first drive rollers 82 and the second drive rollers 84 based on flow rate data measured by the sheet sensor 26. Specifically, the control device 60 can increase the rotation speed of at least one pair of the first drive rollers 82 and the second drive rollers 84 in a case where the flow rate of the sheet-shaped reconstituted tobacco raw material S1 has increased and can decrease the rotation speed of at least one pair of the first drive rollers 82 and the second drive rollers 84 in a case where the flow rate of the sheet-shaped reconstituted tobacco raw material S1 has decreased.

As shown in Fig. 6, the take-up device 80 may further include a tension sensor 89 that is communicably connected to the control device 60 and that measures tension applied to the sheet-shaped reconstituted tobacco raw material S1 discharged from the die 40. The control device 60 can control the first drive rollers 82 such that desired tension is applied to the sheet-shaped reconstituted tobacco raw material S1 based on tension data measured by the tension sensor 89. In a case where the take-up device 80 includes the second drive rollers 84, the control device 60 can control at least one pair of the first drive rollers 82 and the second drive rollers 84 such that desired tension is applied to the sheet-shaped reconstituted tobacco raw material S1 based on measured data received from the tension sensor 89. Specifically, the control device 60 can change a relative speed between the first drive rollers 82 and the second drive rollers 84. The tension sensor 89 shown in Fig. 6 can measure tension applied to the sheet-shaped reconstituted tobacco raw material S1 based on a load applied to the tension roller 86. The tension sensor 89 may be provided in the first direction change roller 88a, the second direction change roller 88b, the first drive rollers 82, or the second drive rollers 84. A known tension sensor, such as a non-contact optical sensor, may be used as the tension sensor 89.

Since the sheet-shaped reconstituted tobacco raw material S1 discharged from the die 40 is easily ripped as described above, a distance in which the sheet-shaped reconstituted tobacco raw material S1 is pulled is shortened to be less likely to be ripped by passing the sheet-shaped reconstituted tobacco raw material S1 through the plurality of freely rotating first direction change roller 88a, tension roller 86, second direction change roller 88b, first drive rollers 82, and second drive rollers 84, in the take-up device 80 shown in Fig. 6. The arrangement of the first direction change roller 88a, the tension roller 86, the second direction change roller 88b, the first drive rollers 82, and the second drive rollers 84 may be changed as needed according to the strength of the sheet-shaped reconstituted tobacco raw material S1. At least one of the first direction change roller 88a, the second direction change roller 88b, the first drive rollers 82, and the second drive rollers 84 may be biased vertically or horizontally by a movable spring, and tension applied from the roller to the sheet-shaped reconstituted tobacco raw material S1 may be allowed to be adjusted without changing the speed of each of the rollers. In the present embodiment, the first direction change roller 88a and the second direction change roller 88b are adopted in order to change the conveying direction of the sheet-shaped reconstituted tobacco raw material S1; however, the configuration is not limited thereto. The number of direction change rollers can be increased or reduced according to, for example, the strength of the sheet-shaped reconstituted tobacco raw material S1, a conveying distance, the layout of components of the take-up device 80, or the like.

Next, a manufacturing method for a reconstituted tobacco sheet in the manufacturing apparatus 100 for a reconstituted tobacco sheet, including the take-up device 80, will be described. Initially, reconstituted tobacco raw material is supplied to the extruder 10, and the reconstituted tobacco raw material is discharged from the die 40 in a sheet shape. At this time, the sheet-shaped reconstituted tobacco raw material S1 is taken off while being sandwiched by the pair of first drive rollers 82, and tension is applied to the sheet-shaped reconstituted tobacco raw material S1. Furthermore, the sheet-shaped reconstituted tobacco raw material S1 from the pair of first drive rollers 82 is preferably taken off while being sandwiched by the pair of second drive rollers 84. Here, as described above, the rotation speed of the second drive rollers 84 is set so as to be higher than the rotation speed of the first drive rollers 82. As described above, downstream of the first drive rollers 82, the sheet-shaped reconstituted tobacco raw material S1 conveyed from the first drive rollers 82 is preferably applied to surface treatment.

Furthermore, as shown in Fig. 6, upstream of the first drive rollers 82, the conveying direction of the sheet-shaped reconstituted tobacco raw material S1 discharged from the die 40 is preferably changed. The tension roller 86 is preferably pressed against the sheet-shaped reconstituted tobacco raw material S1 to apply tension with the tension roller 86 to the sheet-shaped reconstituted tobacco raw material S1 taken off by the pair of first drive rollers 82.

As shown in Fig. 6, the take-up device 80 according to the present embodiment preferably does not include a heating roller or a drying roller. In other words, the sheet-shaped reconstituted tobacco raw material S1 is preferably taken off by the first drive rollers 82 at room temperature.

In a case where the manufacturing apparatus 100 for a reconstituted tobacco sheet includes the sheet sensor 26, the flow rate of the sheet-shaped reconstituted tobacco raw material S1 discharged from the die 40 may be measured, and the rotation speed of the first drive rollers 82 may be controlled based on measured flow rate data. In a case where the take-up device 80 includes the second drive rollers 84, the rotation speed of at least one pair of the first drive rollers 82 and the second drive rollers 84 may be controlled based on measured flow rate data.

In a case where the manufacturing apparatus 100 for a reconstituted tobacco sheet includes the tension sensor 89, tension applied to the sheet-shaped reconstituted tobacco raw material S1 discharged from the die 40 may be measured, and the rotation speed of the first drive rollers 82 may be controlled based on measured tension data. In a case where the take-up device 80 includes the second drive rollers 84, at least one pair of the first drive rollers 82 and the second drive rollers 84 may be controlled based on measured tension data. Specifically, a relative speed between the first drive rollers 82 and the second drive rollers 84 can be changed.

The embodiment of the present invention has been described above; however, the present invention is not limited to the above-described embodiment and may be implemented in various forms within the scope of the appended claims and the technical ideas described in the specification and the drawings. Even any shape or material not directly described in the specification and the drawings is included in the scope of the technical ideas of the invention of the subject application as long as it provides operation and advantageous effects of the invention of the subject application.

### REFERENCE SIGNS LIST

- 10: extruder
- 12c: chamber
- 16: extrusion screw
- 22: temperature or pressure sensor
- 24: temperature sensor
- 26: sheet sensor
- 28: pressure sensor
- 40: die
- 42a: chamber
- 44: discharge port
- 60: control device
- 70: temperature adjustment device
- 80: take-up device
- 100: manufacturing apparatus for a reconstituted tobacco sheet
- S1: sheet-shaped reconstituted tobacco raw material

## Claims

1. A manufacturing apparatus for a reconstituted tobacco sheet, the manufacturing apparatus comprising:
a die that discharges reconstituted tobacco raw material in a sheet shape; and
a temperature adjustment device that adjusts a temperature of the reconstituted tobacco raw material passing through the die.

2. The manufacturing apparatus for a reconstituted tobacco sheet according to claim 1, wherein
the temperature adjustment device is mounted to the die.

3. The manufacturing apparatus for a reconstituted tobacco sheet according to claim 1 or 2, wherein
the temperature adjustment device includes a heating device that heats the reconstituted tobacco raw material passing through the die.

4. The manufacturing apparatus for a reconstituted tobacco sheet according to claim 3, wherein
the heating device is configured to heat the reconstituted tobacco raw material such that the temperature of the reconstituted tobacco raw material passing through the die becomes lower than 100°C.

5. The manufacturing apparatus for a reconstituted tobacco sheet according to claim 1 or 2, wherein
the temperature adjustment device includes a cooling device that cools the reconstituted tobacco raw material passing through the die.

6. The manufacturing apparatus for a reconstituted tobacco sheet according to any one of claims 1 to 5, wherein
the die has a slot-shaped discharge port through which the reconstituted tobacco raw material is discharged in a sheet shape, and
the manufacturing apparatus for a reconstituted tobacco sheet comprises a plurality of the temperature adjustment devices mounted to the die along a longitudinal direction of the discharge port and controllable independently of each other.

7. The manufacturing apparatus for a reconstituted tobacco sheet according to any one of claims 1 to 6, further comprising
a control device configured to control an operation of the temperature adjustment device.

8. The manufacturing apparatus for a reconstituted tobacco sheet according to claim 7, further comprising
a first sensor that is communicably connected to the control device and that measures the temperature of the reconstituted tobacco raw material passing through the die, and
the control device is configured to control the operation of the temperature adjustment device based on measured data of the first sensor.

9. The manufacturing apparatus for a reconstituted tobacco sheet according to claim 7 or 8, further comprising
an extruder that extrudes the reconstituted tobacco raw material to the die,
the extruder includes
an extrusion screw,
a chamber through which the reconstituted tobacco raw material extruded by the extrusion screw passes, and
a second sensor that is communicably connected to the control device and that measures a temperature or a pressure in the chamber, and
the control device controls the operation of the temperature adjustment device based on measured data of the second sensor.

10. The manufacturing apparatus for a reconstituted tobacco sheet according to any one of claims 7 to 9 dependent on claim 6, further comprising
a third sensor that is communicably connected to the control device and that measures an appearance, a flow rate, or a sheet thickness of the sheet-shaped reconstituted tobacco raw material discharged from the die, and
the control device controls an operation of at least one of a plurality of the temperature adjustment devices based on measured data of the third sensor.

11. The manufacturing apparatus for a reconstituted tobacco sheet according to claim 7, further comprising:
an extruder that extrudes the reconstituted tobacco raw material to the die; and
a third sensor that is communicably connected to the control device and that measures an appearance, a flow rate, or a sheet thickness of the sheet-shaped reconstituted tobacco raw material discharged from the die, and
the control device is configured to control an operation of the extruder, and
the control device controls an extrusion rate of the extruder based on measured data of the third sensor.

12. The manufacturing apparatus for a reconstituted tobacco sheet according to any one of claims 1 to 11, further comprising
a take-up device that takes up the sheet-shaped reconstituted tobacco raw material discharged from the die while applying tension to the sheet-shaped reconstituted tobacco raw material.

13. A manufacturing method for a reconstituted tobacco sheet, the manufacturing method comprising:
adjusting a temperature of the reconstituted tobacco raw material passing through a die; and
discharging the reconstituted tobacco raw material from the die in a sheet shape.
